**Europäisches Patentamt**

**European Patent Office**

**Office européen des brevets**

(19)

(11) Publication number : **0 378 419 B1**

# EUROPEAN PATENT SPECIFICATION

(12)

(45) Date of publication of patent specification :
**02.09.92 Bulletin 92/36**

(51) Int. Cl.⁵ : **B60J 10/06**, B60J 1/17, B60R 13/06, B60R 1/06

(21) Application number : **90300335.8**

(22) Date of filing : **11.01.90**

(54) **Front loading flush glass run system.**

(30) Priority : **12.01.89 US 296801**

(43) Date of publication of application :
**18.07.90 Bulletin 90/29**

(45) Publication of the grant of the patent :
**02.09.92 Bulletin 92/36**

(84) Designated Contracting States :
**DE FR GB**

(56) References cited :
**EP-A- 0 241 264**
**DE-A- 3 140 140**
**DE-A- 3 726 924**
**GB-A- 2 140 065**

(73) Proprietor : **THE STANDARD PRODUCTS COMPANY**
**2130 West 110th Street**
**Cleveland Ohio 44102 (US)**

(72) Inventor : **Vaughan, Robert Albert**
**2135 Boldt Street**
**Dearborn Michigan 48124 (US)**

(74) Representative : **Jones, Michael Raymond et al**
**HASELTINE LAKE & CO. Hazlitt House 28**
**Southampton Buildings Chancery Lane**
**London WC2A 1AT (GB)**

## Description

This invention relates to glass run frame assemblies for vehicles.

In the automotive field it is desirable to have a glass run channel frame that easily attaches to the automotive door. Along with the easy attachability, it is desired to have a one-piece construction that may be readily installed in the vehicle door. The glass run channel frame should reduce the time of installation and be less operator-dependent during installation. Further, the glass run channel frame should be of a one-piece construction and be able to be front loaded into a vehicle door.

The present glass run channel frames are generally of a multi-piece construction which are installed in stages into the vehicle door. This multi-stage construction requires additional installation time and is operator-dependent. Further, these systems are not front loaded onto the door and require additional time and expertise during installation.

In GB-A-2140065 there is disclosed an extruded sealing strip with a metallic core which is S-shaped in cross-section and has a first part for clamping around a flange of a vehicle window opening and a second larger part for reception and guidance of the window edge. The strip is not provided with integral means for mounting vehicle accessories, nor is it adapted for front-loading.

According to the present invention, there is provided a glass run assembly (12) comprising:

a frame (16, 18, 20, 22) capable of defining a channel (40) adapted to receive a vehicle window (15) for enabling up and down movement of the window (15) in the channel (40); and

securing means (50) for securing the frame (16, 18, 20, 22) to a flange (46) of a vehicle door, the securing means (50) being integrally formed with the frame (16, 18, 20, 22);

characterized in that

the assembly further comprising a mounting surface (82) adapted so as to provide a mounting surface for a side-mounted rear view mirror (80), spotlight or other article, the mounting surface (82) being coupled with the frame, and in that

the securing means (50) of at least a part of the assembly includes a retaining portion (50) provided with a deflectable side wall (52) enabling the frame (16, 18, 20, 22) to be front-loaded onto the door flange (46), there being a receiving groove (54) in the side wall (52), in which groove (54) a locking strip portion (56) may be received so as to make rigid the retaining portion (50) to enable the securing means to be secured to the door flange (46).

Preferably the assembly also includes supporting means adapted for supporting the frame with respect to the vehicle door at a location below the window opening, the supporting means being coupled with the frame.

The frame may have first and second side members defining opposing side channels, the channels being adapted to enable the vehicle window to move in the channels, a top member defining a channel, the top channel being continuous with the side channels, the top member and the side members being adapted to hold corresponding regions of the vehicle window when the vehicle window is in an up position, and a bottom member transverse to the side members for stabilizing movement of the vehicle window in the side channels.

Preferably the side members and top member comprise a reinforcement member having in cross-section a channel-shaped portion defined by a base and two legs, with one of the legs continuing into an inverted integral L-shaped portion, and a polymeric skin, the securing means being integrally moulded from the skin.

Preferably the top member includes a curved portion extending beyond one of the side members and the bottom member extends beyond the same side member such that said top and bottom members approach one another, there being present a corner at the junction of the top and bottom members connecting the top and bottom members together.

Preferably the mounting surface for supporting a mirror, spotlight or the like is positioned between the junction of the top and bottom members and the one side member.

Preferably the mounting surface includes a plate member retained in the channel of the top member.

Preferably the side members include portions extending beyond the bottom member.

Preferably the side member portions extending beyond the bottom member include supporting means for supporting the assembly on the vehicle door.

The present invention thus provides a one-piece glass run channel frame that may be front loaded onto a vehicle door. The present invention also provides a one-piece glass run channel frame including mirror trim mounting capabilities. The present invention economizes time of installation and is less operator-dependent.

For a better understanding of the present invention, reference is now made to the accompanying drawings in which:

Figure 1 is a side elevation of an automotive vehicle including a glass run channel frame in accordance with the present invention;

Figure 2 is a vertical cross-section through the plane designated by the line 2-2 in Figure 1;

Figure 3 is a vertical cross-section similar to Figure 2 prior to installation;

Figure 4 is a vertical section through the plane designated by the line 4-4 in Figure 1;

Figure 5 is an exploded perspective, partially in cross-section, of the area within circle 5 in Figure 1;

Figure 6 is a horizontal cross-section through the plane designated by line 6-6 in Figure 1;

Figure 7 is a vertical cross-section through the plane designated by the line 7-7 in Figure 1;

Figure 8 is a cross-section through the plane designated by the line 8-8 in Figure 1;

Figure 9 is a vertical cross-section of another embodiment in accordance with the present invention, similar to Figure 2; and

Figure 10 is a vertical cross-section of the embodiment of Figure 9, similar to Figure 3.

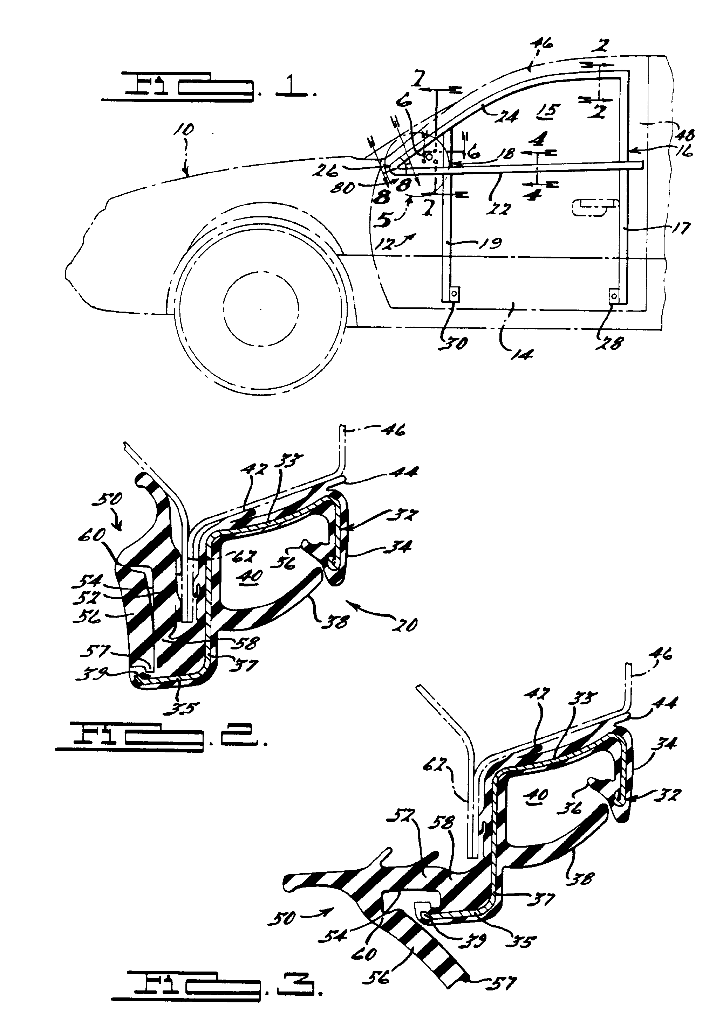

Turning to the figures, particularly Figure 1, a vehicle 10 is illustrated with a glass run frame assembly 12. The glass run frame assembly 12 is positioned within, and secured onto, a vehicle door 14. The frame assembly 12 provides up and down movement of a vehicle window 15. The frame assembly 12 is shown on the front door 14; however, the frame assembly 12 may be modified and secured on rear doors as well.

The glass run frame assembly 12 generally includes a first side member 16, a second side member 18, a top member 20 and a bottom member 22. The side members are connected to the bottom and top 20, 22 members by conventional means. The top member 20 has a curved portion 24 extending downward toward the horizontal bottom member 22 and is connected by a corner 26 at the junction of the top member curved portion 24 and bottom member 22.

The side members 16 and 18 extend beyond the bottom member 22 as seen in Figure 1. The bottom member 22 is substantially transverse to the two side members 16 and 18. Also, the side members 16 and 18 each include support members 28 and 30 to support the frame assembly 12 within the door 14.

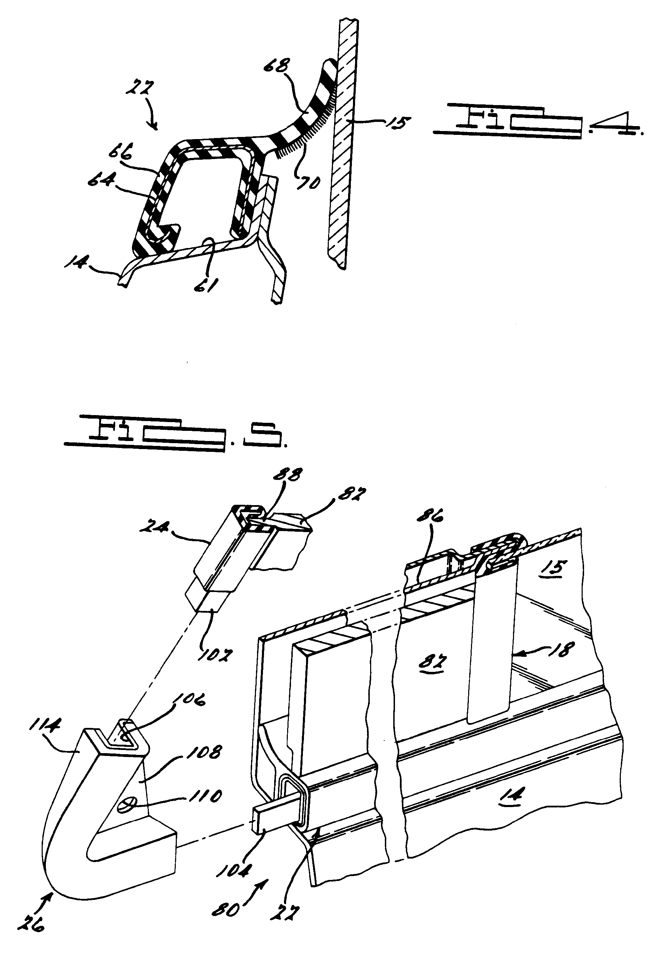

The top 20, bottom 22 and side 16 and 18 members all include a polymeric skin covering and a metallic reinforcement portion. This will be best pointed out in the description of Figures 2 to 4 and 6. Turning to Figure 2, a cross-section of the top member 20 is shown. The cross-section of top member 20 is substantially the same as the cross-section of both side members 16 and 18. Thus, the following discussion applies to the side members as well as to the top member.

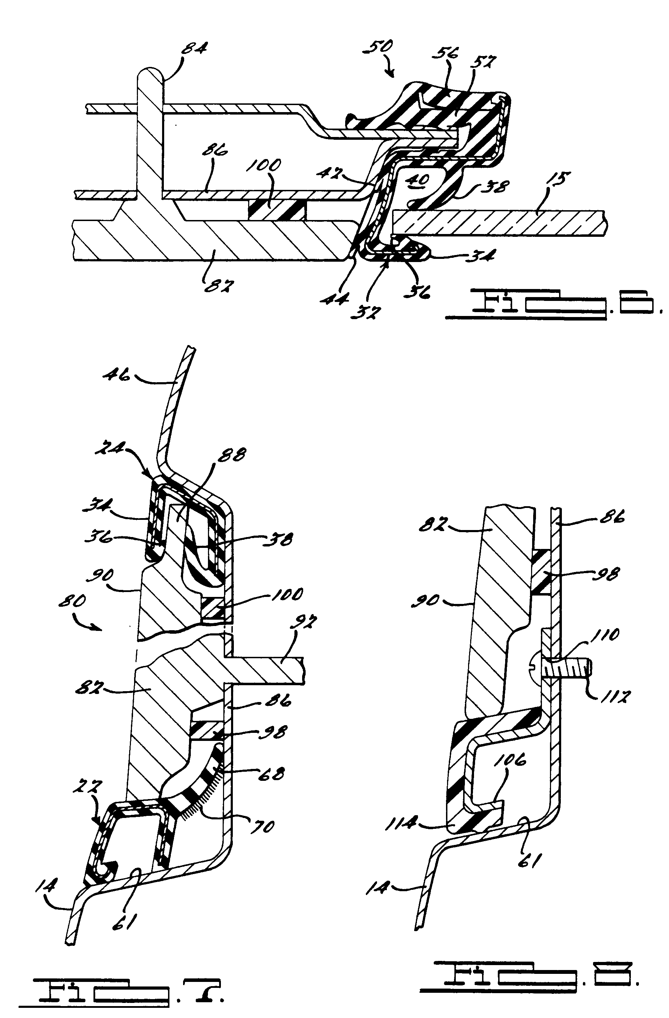

The top member 20 includes a metallic reinforcement member 32 covered by a polymeric skin 34. The reinforcement member 32, in cross-section, has an overall U-shaped portion 33 with one leg longer than the other, the longer leg running into an extending portion 35 forming, with the longer portion of the longer leg, an inverted L-shape portion 37 with respect to the U-shaped portion as seen in Figures 2 and 3. The free end of the extending portion 35 of the L-shaped portion 37 includes an up-turned toe 39.

The polymeric skin 34 includes a pair of sealing fingers 36 and 38 to seal the vehicle window 15 within the channel 40 defined by the interior of the U-shaped portion 33 of the reinforcement member 32. The polymeric skin 34 includes a second set of sealing members 42 and 44 which seal the top member 20 against the door header 46. Likewise, the corresponding sealing members 42 and 44 of the side member 16 would seal the side member 16 against the door pillar 48.

The polymeric skin 34 also includes a flange-retaining portion 50. The retaining portion 50 includes the extending portion 35 of the L-shaped portion 37 and has a side wall 52. The L-shaped portion 37 and side wall 52 define a channel which opens in the opposite direction to the U-shaped portion 33 of the reinforcement member 32. The side wall 52 of the retaining portion 50 has a receiving groove 54 and an elongated lock strip 56. The side wall 52 and lock strip 56 are integrally formed with the polymeric skin 34 and are connected thereto by narrows 58 and 60. The lock strip 56 includes a toe 57 at its free end. The toe 57 abuts toe 39 when the lock strip 56 is in groove 54 to enhance the sealing force of the side wall 52 on the flange 62.

The side members 16 and 18, top member 20 and bottom member 22 are front or outside-in loaded onto the door 14. This is accomplished by positioning the extending portions 17 and 19 of the side members 16 and 18 within the door 14. The support members 28 and 30 are secured to the door 14. The bottom member 22 seats on the door recess 61. The side wall 52 and lock strip 56 of the side members 16 and 18 and top member 20 are moved to a position within the periphery of the door flange 62 so that the frame assembly 12 may be positioned directly onto the door 14 from the front or outside of the door. The polymeric side wall 52 is moved to a position adjacent to the door flange 62 and the lock strip 56 is inserted into groove 54, as seen in Figure 2, so that the retaining portion 50 secures to the door flange 62 thus securing the frame assembly 12 onto the door 14.

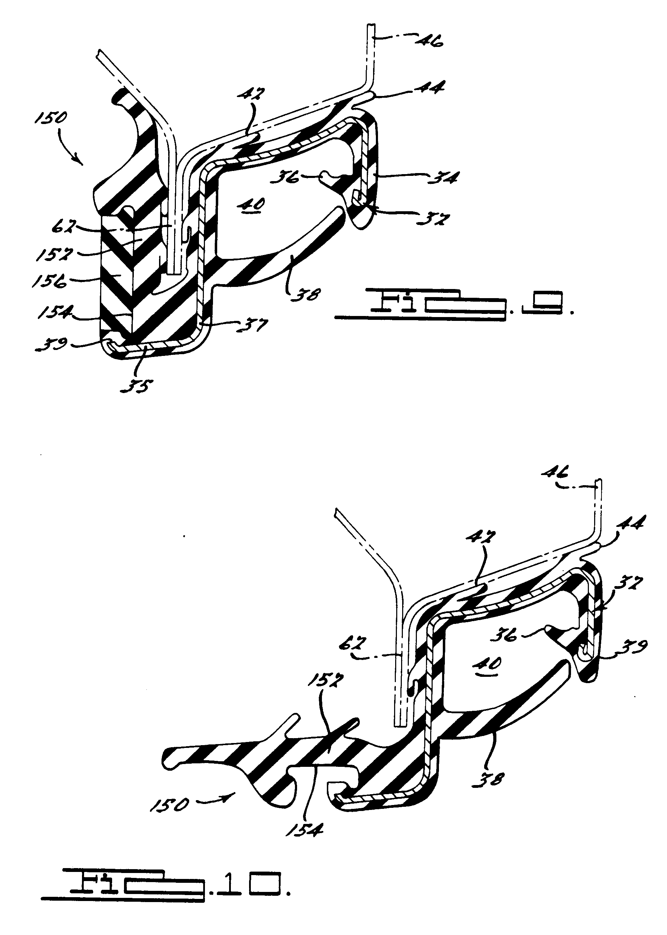

Figure 4 illustrates a cross-section view of the bottom member 22. The bottom member 22 includes a reinforcement member 64 and a polymeric skin 66. The reinforcement member 64 is generally U-shaped in cross-section. The polymeric skin 66 covers the outside and inside of the U-shaped reinforcement member 64. Also the polymeric skin 66 includes an integral sealing member 68 extending from the exterior of the reinforcement member 64 at approximately the junction of the web and leg of the U-shaped reinforcement member 64. The sealing member 68, including flocking 70, seals the vehicle window 15 to prevent rain, precipitation or the like from entering into the door 14.

Figures 5 through 8 illustrate the mounting of the mirror trim 80 in the frame assembly 12. The mirror trim 80 includes a mirror plate 82 positioned between the junction of the top member curve portion 24, the bottom member 22 and the leading edge of the second side member 18. The mirror plate 82 generally includes apertures to enable positioning and attaching of a side view mirror shown in phantom or the like.

Generally, the door 14 has a sheet metal portion 86 directly behind where the mirror plate 82 is to be positioned. The mirror plate 82 includes a bevelled portion 88 which secures the mirror plate 82 within the channel of the curve portion 24 of the top member 20. The mirror plate 82 also includes projecting members 84 and 92 which pass through apertures in the door sheet metal portion 86 to further secure and position the mirror plate 82 in position on the vehicle door 14.

As seen in Figure 6, the cross-section of side member 18 is substantially identical to that of top member 20. The sealing members 42 and 44 abut and seal the mirror plate 82 and door sheet metal portion 86. Also the retaining portion 50 is secured to the peripheral door flange 62.

The sealing fingers 36 and 38 of the top member 20 seal the bevel 88 of the mirror plate 82 as seen is Figure 7. The retaining portion 50 of the top member 20 has been removed in the curve portion defining the mirror trim area. The sealing member 68 abuts the door sheet metal portion 86 to seal the bottom member 22 against the sheet metal portion 86 as seen in Figure 7. Also foam gaskets 98, 100 are positioned on the underside of the mirror plate 82 to further enhance the seal.

Connector plugs 102 and 104 are frictionally secured in the end of the curve portion 24 and the end of the bottom member 22 at the junction of the corner 26 as seen in Figure 5. The plugs 102 and 104 are generally rectangular and are inserted into the reinforcement channel of the curved portion 24 and bottom 22 members. The plugs 102 and 104 are inserted into the channel 106 of the corner 26. The corner 26 includes a recessed portion 108 having an aperture 110 which enables a fastener 112, such as a screw, to secure the corner 26 to the sheet metal portion 86 of the door as seen in Figure 8. The corner 26 includes a polymeric skin 114 covering the channel portion 106. The polymeric skin 114 further enhances the seal between the corner 20 and the door 14.

Figures 9 and 10 illustrate another embodiment of the present invention. The elements which are substantially the same as those previously described will be identified with the same reference numbers.

In Figures 9 and 10, the cross-section of a side or top member is shown. The reinforcement member 32 is the same as that previously discussed including sealing members 36 and 38 and 42 and 44. The retaining portion 150 varies from that previously described.

The retaining portion 150 is generally similar to the retaining portion 50, and it includes a side wall 152 having a receiving slot 154 and a separate lock strip 156 . The lock strip 156 fits into the slot 154 to make rigid the retaining portion 150 once it is applied on a flange 62 . The lock strip 156 may be decorative and manufactured from various materials such as rubber, coloured PVC and may have a bright Mylar coating or the like. The lock strip 156 would be assembled into slot 154 after the retaining portion 150 is positioned about flange 62.

## Claims

1. A glass run assembly (12) comprising:
   a frame (16,18,20,22) capable of defining a channel adapted to receive a vehicle window (15) for enabling up and down movement of the window in the channel; and
   securing means (50) for securing the frame (16,18,20,22) to a flange (46,62) of a vehicle door, the securing means (50) being integrally formed with the frame (16,18,20,22);
   characterized in that
   the assembly further comprises a mounting surface (82) adapted so as to provide a mounting surface for a side-mounted rear view mirror (80), spotlight or other article the mounting surface (82) being coupled with the frame (16,18,20,22), and in that
   the securing means (50) of at least part of the assembly is provided with a retaining portion which includes a deflectable side wall (52) enabling the frame (16,18,20,22) to be front-loaded onto the door flange, there being a receiving groove (54) in the side wall (52), in which groove (54) a locking strip portion (56, 156) may be received so as to make rigid the retaining portion (50) to enable the securing means (50) to be secured to the door flange.

2. An assembly according to claim 1, wherein the retaining portion (50) is provided with an integral locking strip portion (56).

3. An assembly according to claim 1, wherein the locking strip portion is a component separate from the side wall (156).

4. An assembly according to claim 1, 2 or 3, wherein the frame is formed from a reinforcement member covered by a polymeric skin.

5. An assembly according to claim 4, wherein the securing means (50) is formed integrally from the polymeric skin (34).

6. An assembly according to any preceding claim, wherein the securing means (50) includes a channel in which the door flange (46,62) may be received.

7.  An assembly according to any preceding claim, wherein the frame has first and second side members (16, 18) defining opposing side channels, a top member (20) defining a channel, the top channel (20) being continuous with the side channels (16,18), the top member (20) and the side members (16,18) being adapted to hold corresponding regions of the vehicle window when the vehicle window (15) is in an up position, and a bottom member (22) transverse to the side members (16,18) for stabilizing movement of the vehicle window in the side channels.

8.  An assembly according to claim 7, wherein it is the securing means (50) associated with the side (16,18) and top (20) members that is provided with the retaining portion.

9.  An assembly according to claim 7 or 8, wherein the side members (16,18) and top member (20) are formed from a reinforcement member (32) having in cross-section a channel-shaped portion formed by a base and two legs which defines the window-receiving channel, with one of the legs continuing into an inverted integral L-shaped portion (35), which forms part of the securing means (50), and a polymeric skin (34) which is provided over the reinforcement member (32), the securing means (50) being integrally formed from the skin (34).

10. An assembly according to claim 9, wherein the groove (54) of the retaining portion (50) is defined in part by a toe (39) on the end of the inverted L-shaped portion (35).

11. An assembly according to claim 9 or 10, wherein the L-shaped portion (35) and the side wall (52) define between them a channel, in which the door flange (62) may be received.

12. An assembly according to any one of claims 7 to 11, wherein the top member (20) includes a curved portion (24) extending beyond one (18) of the side members (16,18) and the bottom member (22) extends beyond the same side member (18) such that said top (20) and bottom (22) members approach one another, there being present a corner (26) at the junction of the top (20) and bottom (22) members connecting the top and bottom members together.

13. An assembly according to claim 12, wherein the mounting surface is positioned between the junction of the top (20) and bottom (22) members and the one side member (18).

14. An assembly according to claim 13, wherein the mounting surface includes a plate member (82) retained in the channel of the top member (20).

15. An assembly according to any preceding claim, wherein the mounting surface (82) is provided with apertures to enable positioning and attaching of a side view mirror (80) or the like.

16. An assembly according to any preceding claim, which further includes supporting means (28,30) adapted for supporting the frame with respect to the vehicle door at a location below the window opening, the supporting means being coupled with the frame.

17. An assembly according to claim 16, wherein the supporting means (28,30) is formed from side members which include portions extending beyond the bottom member (22).

**Patentansprüche**

1.  Scheibenlaufeinheit (12) mit
    einem Rahmen (16, 18, 20, 22), der einen Kanal bildet, welcher die Fensterscheibe (15) eines Fahrzeuges aufnehmen kann, um eine Auf- und Abbewegung der Scheibe im Kanal zu ermöglichen; und
    Befestigungseinrichtungen (50) zum Befestigen des Rahmens (16, 18, 20, 22) an einem Flansch (46, 62) einer Fahrzeugtür, wobei die Befestigungseinrichtungen (50) einstückig mit dem Rahmen (16, 18, 20, 22) ausgebildet sind;
    dadurch gekennzeichnet, daß
    die Einheit des weiteren eine Montagefläche (82) umfaßt, die eine Montagefläche für einen an der Seite montierten Rückspiegel (80), einen Sucher oder einen anderen Gegenstand vorsieht und die mit dem Rahmen (16, 18, 20, 22) verbunden ist, und
    die Befestigungseinrichtungen (50) von mindestens einem Teil der Einheit mit einem Halteabschnitt versehen sind, der eine verformbare Seitenwand (52) aufweist, so daß der Rahmen (16, 18, 20, 22) von vorne am Türflansch angebracht werden kann, wobei eine Aufnahmenut (54) in der Seitenwand (52) vorgesehen ist, von der ein Verriegelungsstreifenabschnitt (56, 156) aufgenommen werden kann, um den Halteabschnitt (50) zu versteifen und eine Befestigung der Befestigungseinrichtungen (50) am Türflansch zu ermöglichen.

2. Einheit nach Anspruch 1, bei der der Halteabschnitt (50) mit einem einstückig damit ausgebildeten Verriegelungsstreifenabschnitt (56) versehen ist.

3. Einheit nach Anspruch 1, bei dem der Verriegelungsstreifenabschnitt ein von der Seitenwand (156) getrennter Bestandteil ist.

4. Einheit nach Anspruch 1, 2 oder 3, bei der der Rahmen aus einem Verstärkungselement gebildet ist, das von einer Haut aus polymerem Material bedeckt wird.

5. Einheit nach Anspruch 4, bei der die Befestigungseinrichtungen (50) einstückig aus der Haut (34) aus dem polymeren Material geformt sind.

6. Einheit nach einem der vorangehenden Ansprüche, bei der die Befestigungseinrichtungen (50) einen Kanal aufweisen, in dem der Türflansch (46, 62) angeordnet werden kann.

7. Einheit nach einem der vorangehenden Ansprüche, bei der der Rahmen ein erstes und zweites Seitenelement (16, 18), die gegenüberliegende Seitenkanäle bilden, ein oberes Element (20), das einen oberen Kanal (20) bildet, der kontinuierlich mit den Seitenkanälen (16, 18) verläuft, wobei das obere Element (20) und die Seitenelemente (16, 18) entsprechende Bereiche der Fahrzeugfensterscheibe halten, wenn sich die Fahrzeugfensterscheibe (15) in einer oberen Position befindet, und ein unteres Element (22) aufweist, das quer zu den Seitenelementen (16, 18) verläuft und die Bewegung der Fahrzeugfensterscheibe in den Seitenkanälen stabilisiert.

8. Einheit nach Anspruch 7, bei der die den Seitenelementen (16, 18) und dem oberen Element (20) zugeordneten Befestigungseinrichtungen (50) mit dem Halteabschnitt versehen sind.

9. Einheit nach Anspruch 7 oder 8, bei der die Seitenelemente (16, 18) und das obere Element (20) aus einem Verstärkungselement (32) gebildet sind, das im Querschnitt einen kanalförmigen Abschnitt aufweist, der eine Basis und zwei Schenkel umfaßt, die den Aufnahmekanal für die Fensterscheibe bilden, wobei sich einer der Schenkel in einen einstückig damit ausgebildeten Abschnitt (35) in der Form eines umgedrehten L fortsetzt, der einen Teil der Befestigungseinrichtungen (50) bildet, und daß die Seitenelemente und das obere Element aus einer Haut (34) aus polymerem Material gebildet sind, die über dem Verstärkungselement (32) angeordnet ist, wobei die Befestigungseinrichtungen (50) einstückig aus der Haut (34) ausgebildet sind.

10. Einheit nach Anspruch 9, bei der die Nut (54) des Halteabschnittes (50) teilweise durch eine Spitze (39) am Ende des Abschnittes (35) in der Form des umgedrehten L gebildet ist.

11. Einheit nach Anspruch 9 oder 10, bei der der L-förmige Abschnitt (35) und die Seitenwand (52) zwischen sich einen Kanal bilden, der den Türflansch (62) aufnehmen kann.

12. Einheit nach einem der Ansprüche 7 bis 11, bei der das obere Element (20) einen gekrümmten Abschnitt (24) aufweist, der sich über eines (18) der Seitenelemente (16, 18) hinaus erstreckt, und daß sich das untere Element (22) über das gleiche Seitenelement (18) hinaus erstreckt, derart, daß sich das obere Element (20) und das untere Element (22) einander nähern, wobei an der Verbindungsstelle zwischen dem oberen Element (20) und dem unteren Element (22) eine Ecke (26) vorgesehen ist, die das untere und obere Element miteinander verbindet.

13. Einheit nach Anspruch 12, bei der die Montagefläche zwischen der Verbindungsstelle zwischen dem oberen Element (20) und dem unteren Element (22) und dem einen Seitenelement (18) angeordnet ist.

14. Einheit nach Anspruch 13, bei der die Montagefläche ein Plattenelement (82) umfaßt, das im Kanal des oberen Elementes (20) gehalten ist.

15. Einheit nach einem der vorangehenden Ansprüche, bei der die Montagefläche (82) mit Öffnungen versehen ist, um eine Positionierung und Befestigung eines Seitenspiegels (80) o.ä. zu ermöglichen.

16. Einheit nach einem der vorangehenden Ansprüche, die des weiteren Lagereinrichtungen (28, 30) umfaßt, um den Rahmen relativ zur Fahrzeugtür an einer Stelle unter der Fensteröffnung zu lagern, wobei diese Lagereinrichtungen mit dem Rahmen verbunden sind.

17. Einheit nach Anspruch 16, bei der die Lagereinrichtungen (28, 30) aus Seitenelementen geformt sind, die Abschnitte aufweisen, die sich über das untere Element (22) hinaus erstrecken.

**Revendications**

1. Système de guidage de vitres (12) comprenant:
un cadre (16, 18, 20, 22) capable de définir une gorge adaptée à recevoir une vitre de véhicule (15) pour permettre un mouvement vers le haut et le vers le bas de la vitre dans la gorge; et

un moyen de fixation (50) pour fixer le cadre (16, 18, 20, 22) à un rebord d'une porte de véhicule, le moyen de fixation (50) étant formé de façon solidaire avec le cadre (16, 18, 20, 22),

caractérisé en ce que:

le système comprend en outre une surface de montage (82) adaptée à fournir une surface de montage pour un rétroviseur (80), un projecteur ou tout autre article monté latéralement, la surface de montage (82) étant reliée au cadre (16, 18, 20, 22), et en ce que:

le moyen de fixation (50) d'au moins une partie du système, est muni d'une partie de retenue qui comporte une paroi latérale déformable (52) permettant au cadre (16, 18, 20, 22) d'être inséré de front sur le rebord de porte, une rainure de réception (54) étant présente dans la paroi latérale (52), rainure (54) dans laquelle une partie formant languette de verrouillage (56, 156) peut être reçue de façon à rigidifier la partie de retenue (50) et à permettre la fixation du moyen de fixation (50) au rebord de porte.

2. Système selon la revendication 1, dans lequel la partie de retenue (50) est munie d'une partie formant languette de verrouillage intégrale (56).

3. Système selon la revendication 1, dans lequel la partie formant languette de verrouillage est un composant séparé de la paroi latérale (156).

4. Système selon les revendications 1, 2 ou 3, dans lequel le cadre est formé à partir d'un élément de renforcement recouvert d'un revêtement polymère.

5. Système selon la revendication 4, dans lequel le moyen de fixation (50) est formé intégralement à partir du revêtement polymère (34).

6. Système selon l'une quelconque des revendications précédentes, dans lequel le moyen de fixation (50) comporte une gorge dans laquelle le rebord de porte (46, 62) peut être reçu.

7. Système selon l'une quelconque des revendications précédentes, dans lequel le cadre a un premier et un second éléments latéraux (16, 18) définissant des gorges latérales opposées, un élément supérieur (20) définissant une gorge, la gorge supérieure (20) étant continue avec les gorges latérales (16, 18), l'élément supérieur (20) et les éléments latéraux (16, 18) étant adaptés à maintenir des régions correspondantes de la vitre de véhicule lorsque la vitre de véhicule (15) est en position haute, et un élément inférieur (22) transversal par rapport aux éléments latéraux (16, 18) pour stabiliser le mouvement de la vitre de véhicule dans les gorges latérales.

8. Système selon la revendication 7, dans lequel c'est le moyen de fixation (50) associé aux éléments latéraux (16, 18) et supérieur (20) qui est muni de la partie de retenue.

9. Système selon la revendication 7 ou 8, dans lequel les éléments latéraux (16, 18) et l'élément latéral (20) sont formés à partir d'un élément de renforcement (32) ayant, en coupe transversale, une partie en forme de gorge constituée par une base et deux jambes qui définissent la gorge de réception de vitre, l'une des jambes se prolongeant en une partie en L intégral inversé (35), qui fait partie du moyen de fixation (50), et un revêtement polymère (34) qui recouvre l'élément de renforcement (32), le moyen de fixation (50) étant formé intégralement à partir du revêtement (34).

10. Système selon la revendication 9, dans lequel la rainure (54) de la partie de retenue (50) est définie en partie par un repli (39) à l'extrémité de la partie en L inversé (35).

11. Système selon la revendication 9 ou 10, dans lequel la partie en L (35) et la paroi latérale (52) définissent entre elles une gorge dans laquelle le rebord de porte (62) peut être reçu.

12. Système selon l'une quelconque des revendications 7 à 11, dans lequel l'élément supérieur (20) comporte une partie incurvée (24) se prolongeant au-delà de l'un (18) des éléments latéraux (16, 18) et dans lequel l'élément inférieur (22) se prolonge au-delà de ce même élément latéral (18) de façon à ce que lesdits éléments supérieur (20) et inférieur (22) se rapprochent l'un de l'autre, un élément d'angle (26) étant présent à la jonction entre les éléments supérieur (20) et inférieur (22) pour relier les éléments supérieur et inférieur l'un à l'autre.

13. Système selon la revendication 12, dans lequel la surface de montage est disposée entre la jonction des éléments supérieur (20) et inférieur (22), et l'élément latéral (18).

14. Système selon la revendication 13, dans lequel la surface de montage comprend un élément formant plaque (82) retenu dans la gorge de l'élément supérieur (20).

15. Système selon la revendication 12, dans lequel la surface de montage (82) est munie d'ouvertures permettant le positionnement et la fixation d'un rétroviseur latéral (80) ou d'un dispositif de ce type.

16. Système selon l'une quelconque des revendications précédentes, comprenant en outre un moyen de support (28, 30) adapté à supporter le cadre par rapport à la porte de véhicule en un point situé sous l'ouverture de la fenêtre, le moyen de support étant relié au cadre.

17. Système selon la revendication 16, dans lequel le moyen de support (28, 30) est formé à partir des éléments latéraux qui comprennent des parties se prolongeant au-delà de l'élément inférieur (22).

FIG. 1.

FIG. 2.

FIG. 3.

FIG. 4.

FIG. 5.

FIG. 6.

FIG. 7.

FIG. 8.

FIG. 9.

FIG. 10.